# FASCICULE DE BREVET EUROPEEN

(11) **EP 0 739 825 B1**
(45) Date de publication et mention de la délivrance du brevet: **06.05.1999**
(21) Numéro de dépôt: 96400597.9
(22) Date de dépôt: 21.03.1996
(51) Int. Cl.: B65D 21/02, A23G 3/00, A21C 15/02

(54) **Dispositif de conditionnement pour confiseries, crèmes glacées, boissons et analogues**
Verpackung für Speiseeis, Konditoreiwaren, Getränke oder dergleichen
Packaging device for ice cream,confectionary,beverages or the like

(30) Priorité: 24.04.1995 FR 9504877; 29.11.1995 FR 9514132
(43) Date de publication de la demande: 30.10.1996
(73) Titulaire: Savalle, Patrick, 92500 Rueil Malmaison (FR)
(72) Inventeur: Savalle, Patrick, 92500 Rueil Malmaison (FR)
(74) Mandataire: Coester, Jacques Charles

(56) Documents cités:
- EP-A- 0 350 529
- DE-A- 3 739 016
- DE-U- 9 420 381
- FR-A- 1 223 345
- US-A- 4 929 457

## Description

L'invention concerne un nouveau dispositif de conditionnement dont la fonction est analogue à celle des cornets utilisés habituellement en confiserie ou pâtisserie, notamment pour la distribution de boissons et de crèmes glacées.

Jusqu'à présent, les cornets utilisés dans le commerce présentent la forme de cônes prolongés éventuellement par un tronçon cylindrique.

La grande distribution a familiarisé le public avec la vente de cornets du type rappelé ci-dessus dans des emballages de forme générale parallélépipédique.

Pour remplir autant que possible les emballages parallélépipédiques, les cônes formés par les cornets sont alternativement inversés. La place perdue est néanmoins considérable.

A titre d'exemple, des cornets d'une capacité de 125 ml distribués par jeu de six dans un même emballage représentent un volume total de 750 ml et sont généralement vendus dans une boîte présentant une longueur de 20,5 cm, une largeur de 18 cm et une hauteur de 6,2 cm, soit un volume de 2288 ml.

Cela constitue un inconvénient grave pour le stockage en magasin, en particulier pour des produits tels que des crèmes glacées.

Le même inconvénient se retrouve chez l'utilisateur lorsque l'emballage est stocké dans un congélateur.

La technique antérieure a fait connaître différentes réalisations qui ne permettent pas de solutionner le problème exposé.

DE-A-37 39 016 a fait connaître un récipient constituant un tube ou une bouteille présentant une forme semblable à une pyramide. Les parois du récipient sont disposées essentiellement dans le prolongement de trois surfaces d'enveloppe qui forment un angle d'un cube ou quadrilatère imaginaire présentant une surface de base carrée.

La diagonale de la surface de base carrée est opposée à l'angle que forment les trois surfaces d'enveloppe de sorte que, pour chaque récipient, il existe deux côtés nécessairement à angle droit et une base triangulaire reliant ces deux côtés.

EP-A-0 350 529 concerne un procédé et un appareil pour fabriquer des cornets ou pots de forme approximativement conique qui s'étendent depuis un plateau. Les cornets ainsi réalisés peuvent être emboîtés les uns dans les autres pour occuper un faible espace tant qu'ils ne sont pas remplis.

Mais après le remplissage tous les inconvénients d'un récipient conique ou tronconique doivent être pris en compte, ce qui rend impossible de disposer plusieurs récipients pour que leurs formes extérieures s'adaptent les unes avec les autres en réduisant le volume résultant de l'assemblage de quatre récipients.

DE-U-94 20 381 décrit, aussi, un récipient dont la forme générale est celle que délimitent deux troncs de cône ou de pyramide assemblés par leur grande base, c'est-à-dire que la partie de plus grand périmètre du récipient se trouve au voisinage de la partie médiane.

US-A-4 929 457 décrit un cornet pour des glaces et produits analogues dont la forme générale est conique mais dont au moins une surface plane faisant partie de la paroi du cornet apparaît séquente à un cône fictif.

En outre des nervures sont formées à l'intérieur du cornet pour limiter la mesure dont la glace est introduite dans certains cornets.

La ou les surfaces planes qui apparaissent séquentes aux cônes rendent possible d'assembler deux ou quatre cornets les uns contre les autres mais leur embouchure est toujours dirigée dans le même sens et, par conséquent, le volume occupé par les cornets assemblés n'est que peu différent du volume occupé par des cornets de forme rigoureusement conique.

FR-A- 1 223 345 concerne un tube pouvant être carré, rectangulaire ou rond en section, ce tube étant prévu pour présenter une partie de rupture permettant une ouverture facile pour obtenir accès au produit contenu.

Le problème posé par l'invention n'est même pas suggéré.

L'invention résout le problème résultant de ce qui précède.

Parmi les documents antérieurs analysés ci-dessus, l'art antérieur le plus proche de la présente invention est constitué par le document DE-A-37 39 016 qui montre un récipient de forme pyramidale, mais qui ne pourrait pas être utilisé en tant que dispositif de conditionnement pour confiseries, crèmes glacées, boissons et analogues, puisqu'il ne constitue pas un cornet. Par rapport à ce document, l'invention est caractérisée par l'énoncé de la revendication 1 annexée.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.
La fig. 1 est une perspective d'un élément pour la réalisation du dispositif de conditionnement de l'invention dans sa forme la plus simple.
La fig. 2 est une perspective éclatée du dispositif de conditionnement comportant quatre éléments.
La fig. 3 est une perspective du dispositif de conditionnement lorsque les éléments qui le constituent sont assemblés.
Les fig. 4 à 8 sont des perspectives illustrant des variantes de réalisation de l'élément de conditionnement constitutif du dispositif.
La fig. 9 est une perspective schématique illustrant une autre forme de réalisation.
La fig. 10 est une perspective, analogue à la fig. 9, illustrant une caractéristique supplémentaire.
La fig. 11 est une perspective du dispositif de conditionnement, analogue à la fig. 3, mais lorsque les éléments des fig. 9 ou 10 sont assemblés.
La fig. 12 est une coupe vue suivant la ligne XII-XII de la fig. 11.
La fig. 13 est une perspective analogue à la fig. 9 faisant apparaître une variante.

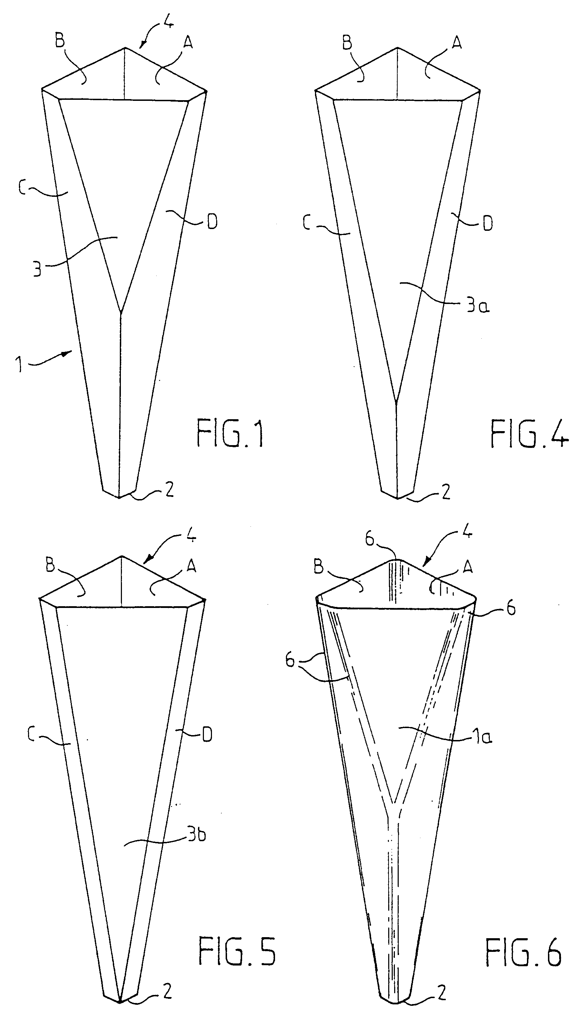

Le dispositif de conditionnement est constitué à partir d'éléments de conditionnement 1 (fig. 1) pouvant être réalisés en différentes matières, notamment en biscuit du genre pâte à crêpe, en pain azyme, en carton pré-traité pour être rendu étanche, en matière plastique dite alimentaire, etc.

Aux fig. 1 à 8, chaque élément présente la forme d'une pyramide comportant une petite base constituant un fond 2, de section quadrangulaire, de préférence carrée, pouvant indifféremment être ouverte ou fermée. Les quatre côtés de la pyramide sont disposés à angle droit les uns par rapport aux autres comme illustré par les références A, B, C et D.

A la fig. 1, les quatre côtés ci-dessus sont plans.

Les côtés C et D présentent une troncature délimitant une facette 3 qui s'étend sur la moitié de la hauteur de l'élément et qui présente la forme d'un triangle isocèle.

L'élément, tel que celui décrit dans ce qui précède, est destiné à être rempli d'une matière à distribuer ou consommer, par exemple des confiseries, de la crème glacée, une boisson ou analogues.

Comme la petite base 2, la grande base 4, qui est pentagonale, peut être ouverte ou fermée. Lorsqu'elle est fermée, elle l'est de préférence par une pellicule sécable.

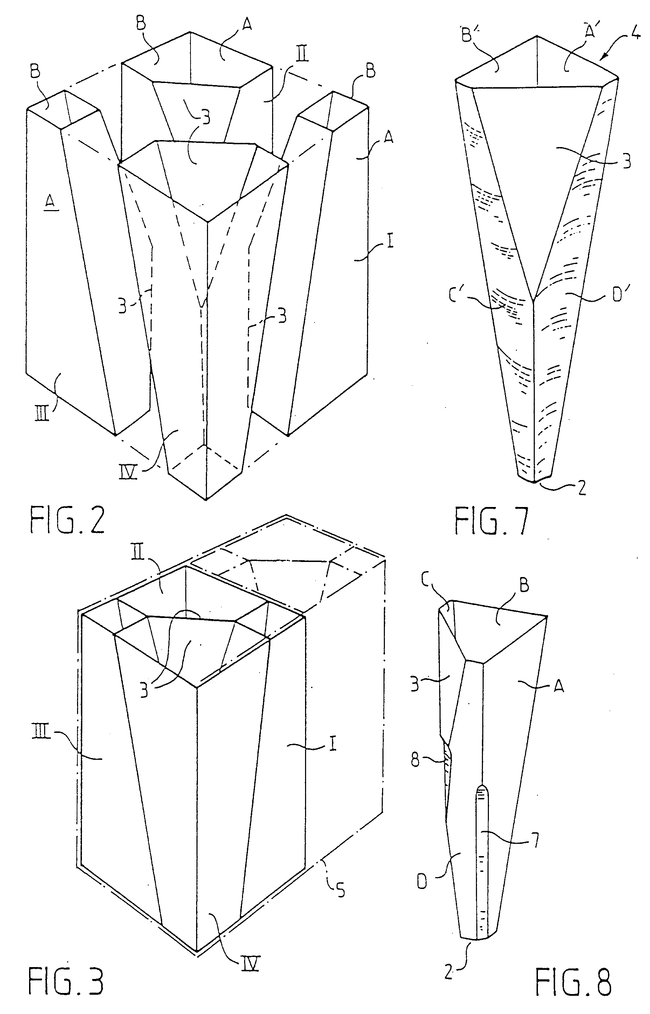

Les fig. 2 et 3 montrent que quatre éléments I, II, III, IV, tels que décrits, peuvent être assemblés pour constituer un parallélépipède rectangle en disposant tête-bêche deux éléments par rapport à deux autres. En effet, dans ce cas, les facettes 3 s'appliquent les unes contre les autres de même que les côtés de la pyramide à petite base carrée et grande base pentagonale. Ce résultat est obtenu du fait de l'obliquité de l'axe joignant la petite à la grande base de chaque élément.

La fig. 3 montre qu'ainsi plusieurs dispositifs formés chacun par l'assemblage de quatre éléments formant un parallélépipède rectangle peuvent être disposés côte à côte dans un même emballage 5 de section rectangulaire tout en occupant tout le volume de cet emballage.

Les dispositifs décrits dans ce qui précède pour la réalisation d'un élément constitutif du dispositif peuvent présenter des formes légèrement différentes sans réduire de façon notable leur volume utile et tout en conservant les qualités essentielles d'assemblage de quatre éléments de base pour la constitution d'un dispositif de conditionnement.

A la fig. 4, la facette 3a s'étend sur une hauteur supérieure à la moitié de la hauteur de l'élément représenté, ce qui réduit d'une mesure correspondante la largeur des côtés C et D et, par conséquent, la compacité du dispositif réalisable par l'assemblage tête-bêche de quatre éléments.

A la fig. 5, la facette 3b s'étend sur toute la hauteur de la pyramide dont les côtés A et B restent néanmoins à angle droit l'un par rapport à l'autre sur toute la hauteur de l'élément.

A la fig. 6, l'élément comporte, comme à la fig. 1, une facette 1a ; les angles ne sont plus vifs mais arrondis comme illustré en 6, ce qui confère à l'élément un aspect voisin de celui des cornets habituellement utilisés pour des crèmes glacées.

Il est évident que la facette 1a peut, le cas échéant, être formée sur une plus grande hauteur, par exemple comme illustré aux fig. 4 et 5. Les angles arrondis 6 ne limitent que très peu la capacité de chaque élément et le dispositif en résultant n'est lui-même que peu réduit dans son volume utilisable.

La fig. 7 illustre une autre variante selon laquelle le côté C' est convexe et le côté D' est concave c'est-à-dire que les côtés sont conformés pour être respectivement convexe et concave. La facette 3 est, comme précédemment, réalisée de manière analogue à celle décrite en référence à la fig. 1 ou aux fig. 4 et 5. Tous les côtés pourraient aussi être uniquement convexes ou concaves.

Bien que cela ne soit pas représenté, les côtés A' et B' peuvent eux-mêmes être légèrement concaves ou convexes.

La disposition ci-dessus de la fig. 7 ne réduit pas le volume utilisable si les parties convexes épousent parfaitement les parties concaves et permet une préhension particulièrement adaptée, l'extrémité des doigts d'un utilisateur étant ainsi centrée automatiquement par la surface concave des côtés.

En utilisant la réalisation selon la fig. 7, et pour constituer un parallélépipède rectangle sans perte de volume, on met en oeuvre deux jeux de cornets. Un premier jeu de deux cornets présente une surface C' convexe et une surface D' concave alors qu'un second jeu de deux cornets présente une surface C' concave et une surface D' convexe. Les surfaces des différents cornets s'épousent alors d'un cornet à l'autre (face D' de I sur D' de II : face C' de I sur C' de III, etc.), c'est-à-dire que les convexités et concavités sont opposées.

Suivant la fig. 8, l'élément présente la même configuration de base qu'aux fig. 1 à 5. En particulier, la représentation est la même que celle de la fig. 1 mais des méplats, des chanfreins ou des concavités diverses 7, 8 sont formés à partir de la petite base 2 et s'étendent sur une partie seulement de la hauteur de l'élément pour en faciliter la préhension sans en réduire de façon appréciable le volume utile.

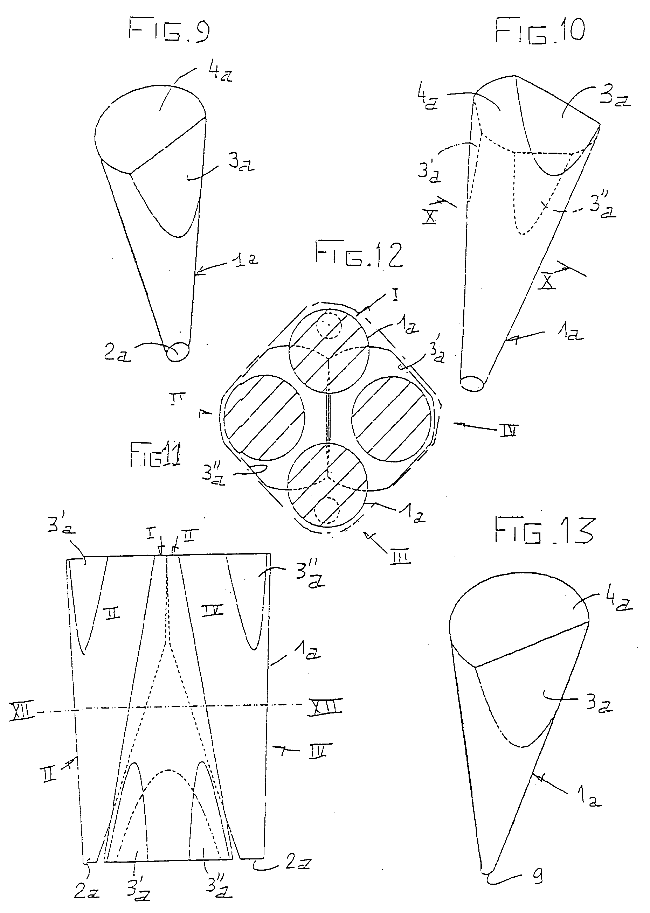

Selon les fig. 9 à 13, les éléments de conditionnement 1a présentent la forme générale non plus d'une pyramide mais d'un cône comportant, aux fig. 9 à 12, une petite base 2a constituant un fond de forme circulaire.

A la fig. 9, la grande base 4a est de forme générale circulaire mais présente une sécante délimitée par une troncature formant une facette 3a.

Il est avantageux supplémentairement, comme illustré par la fig. 10, de prévoir, à partir de la grande base 4a des facettes auxiliaires 3'a, 3''a perpendiculaires entre elles et faisant un angle de 45° avec la facette 3a. D'autres angles pourraient être choisis, en particulier les facettes 3'a et 3''a peuvent former un angle de 60° pour que les trois facettes s'étendent suivant les côtés d'un triangle équilatéral. Pour faciliter la fabrication, les facettes peuvent présenter une dépouille.

Les fig. 11 et 12 montrent que quatre éléments I, II, III, IV, tels que décrits, peuvent être assemblés pour constituer pratiquement un parallélépipède rectangle lorsqu'ils sont disposés deux à deux tête-bêche.

En effet, dans ce cas, les facettes 3a s'appliquent deux à deux les unes contre les autres et les facettes auxiliaires 3'a, 3''a de chaque jeu de deux éléments sont disposées parallèlement les unes aux autres, ce qui permet que les quatre éléments ne laissent libres, entre eux, que des volumes très faibles tout en conférant à chaque élément une forme visuellement conique.

Il y a lieu de remarquer, ce qu'illustrent bien les fig. 11 et 12, que l'axe du tronc de cône formé initialement est oblique, c'est-à-dire qu'il s'étend du centre de la petite base 2a au centre de la grande base la de sorte que l'assemblage de quatre éléments constitue un pseudo-parallélépipède rectangle.

La fig. 13 illustre une variante selon laquelle la petite base est supprimée, chaque élément 1a se terminant par un sommet 9.

L'assemblage est réalisé, comme dans les exemples précédents, par des jeux de deux éléments disposés tête-bêche.

Outre ce qui précède, il doit être considéré que les grande et petite bases peuvent elles-mêmes être concaves ou convexes et recevoir des accessoires divers. Dans les diverses réalisations, la troncature 3, 3a peut être ouverte pour donner accès à l'intérieur du cornet, cette ouverture de même que celle de la grande base pouvant être ensuite fermées par une pellicule sécable ou pelable. De même, une partie, par exemple la partie basse des cornets, peut être fabriquée en biscuit ou analogue et l'autre partie, à savoir la partie haute en glace ou autre matière alimentaire. La séparation entre les matières peut être réalisée au niveau de la section X-X de la fig. 10.

L'invention n'est pas limitée aux exemples de réalisation, représentés et décrits en détail, car diverses modifications peuvent y être apportées sans sortir de son cadre.

## Revendications

1. Dispositif de conditionnement pour confiseries, crèmes glacées, boissons et analogues, caractérisé en ce qu'il comporte des éléments (I, II, III, IV) présentant chacun la forme générale d'un cornet oblique délimitant une grande base (4, 4a) et une petite base (2, 2a), la grande base formant l'embouchure du cornet, une troncature (3, 3a) formant une facette s'étendant sur une partie de la hauteur, les facettes de deux éléments étant disposées de façon contigue pour constituer un premier jeu d'éléments complémentaires à un second jeu d'éléments réalisés de même manière mais disposés têtebêche par rapport au premier jeu d'éléments.

2. Dispositif suivant la revendication 1, caractérisé en ce qu'il est mis en place dans un emballage (5) de section rectangulaire.

3. Dispositif suivant l'une des revendications 1 ou 2, caractérisé en ce qu'il est réalisé en partie en biscuit ou analogue et en partie en une autre matière alimentaire.

4. Dispositif suivant l'une des revendications 1 à 3, caractérisé en ce que la troncature de chaque élément délimite une facette (3) s'étendant sensiblement sur la moitié de la hauteur de l'élément.

5. Dispositif suivant l'une des revendications 1 à 4, caractérisé en ce que les cornets présentent chacun la forme générale d'une pyramide tronquée à petite base quadrangulaire et grande base pentagonale délimitée par la troncature formant les facettes (3).

6. Dispositif suivant l'une des revendications 1 à 5, caractérisé en ce que les côtés de l'élément présentent des angles vifs.

7. Dispositif suivant l'une des revendications 1 à 6, caractérisé en ce que les côtés des éléments sont reliés par des arrondis (6).

8. Dispositif suivant l'une des revendications 1 à 7, caractérisé en ce qu'un au moins des cotés ou des bases des éléments est concave ou convexe.

9. Dispositif suivant l'une des revendications 1 à 8, caractérisé en ce qu'un des éléments d'un jeu d'éléments présente une surface (C') convexe ou une surface (D') concave et en ce que les éléments d'un second jeu présentent des surfaces de convexité et concavité opposées.

10. Dispositif suivant l'une des revendications 1 à 9, caractérisé par des méplats, chanfreins ou concavités diverses (7, 8) s'étendant sur une partie au moins des angles formés par les côtés de chaque élément.

11. Dispositif suivant l'une des revendications 1 à 4, caractérisé en ce que le cornet oblique a la forme générale d'un cône à partir de la grande base.

12. Dispositif suivant l'une des revendications 1 à 4 et 11, caractérisé en ce que le cône présente un axe oblique.

13. Dispositif suivant l'une des revendications 1 à 4, 11 et 12, caractérisé en ce que chaque élément présente des facettes auxiliaires (3'a, 3''a) disposées par rapport à la facette (3a) soit sensiblement à 45°, soit sensiblement à 60°.

14. Dispositif suivant l'une des revendications 1 à 4 et 11 à 13, caractérisé en ce que chaque élément est constitué par un tronc de cône.

15. Dispositif suivant l'une des revendications 1 à 14, caractérisé en ce qu'au moins la grande base de chaque élément est fermée par une pellicule sécable ou pelable.

## Claims

1. Packaging device for confectionaries, ice creams, beverages and the like, characterized in that it comprises members (I, II, III, IV) each having the general shape of an oblique horn delimiting a greater base (4, 4a) and a smaller base (2, 2a), the greater base forming the mouth of the horn, a truncation (3, 3a) that forms a face extending on a part of the height, the faces of two members being arranged in an adjacent manner for constituting a first set of members that are complementary to a second set of members made similarly but arranged top to bottom relatively to the first set of members.

2. Device according to claim 1, characterized in that it is positioned in a packing (5) of a rectangular cross-section.

3. Device according to one of claims 1 or 2, characterized in that it is made in part of biscuit or similar and in part of an other food product.

4. Device according to one of claims 1 to 3, characterized in that the truncation of each member delimits a face (3) extending substantially on one half of the height of the member.

5. Device according to one of claims 1 to 4, characterized in that the horns each have the general shape of a truncated pyramid with a quadrangular smaller base and a pentagonal greater base defined by the truncation that forms the faces (3).

6. Device according to one of claims 1 to 5, characterized in that the sides of the member have sharp angles.

7. Device according to one of claims 1 to 6, characterized in that the sides of the members are connected by rounded parts (6).

8. Device according to one of claims 1 to 7, characterized in that one at least of the sides or the bases of the members is concave or convex.

9. Device according to one of claims 1 to 8, characterized in that one of the members of a set of members has a convex surface (C') of a concave surface (D'), and in that the members of a second set have surfaces with opposite convexity and concavity.

10. Device according to one of claims 1 to 9, characterized by flats surfaces, bevelled surfaces or various concavities (7, 8) that extend on one part at least of the angles formed by the sides of each member.

11. Device according to one of claims 1 to 4, characterized in that the oblique horn has the general shape of a cone from the greater base.

12. Device according to one of claims 1 to 4 and 11, characterized in that the cone has an oblique axis.

13. Device according to one of claims 1 to 4, 11 and 12, characterized in that each member has auxiliary faces (3'a, 3''a) arranged with respect to the face (3a) either substantially at 45°, or substantially at 60°.

14. Device according to one of claims 1 to 4 and 11 to 13, characterized in that each element is formed by a truncated cone.

15. Device according to one of claims 1 to 14, characterized in that at least the greater base of each member is closed by a sectile or peelable film.

## Patentansprüche

1. Verpackungsvorrichtung für Süßwaren, Eiskreme, Getränke und dergleichen, dadurch gekennzeichnet, daß sie Elemente (I, II, III, IV) umfaßt, die jeweils die allgemeine Gestalt einer eine große Basis (4, 4a) und eine Kleine Basis (2, 2a) abgrenzenden schrägen Tüte aufweist, wobei die große Basis die Mündung der Spitztüte bildet, wobei eine Abstumpfung (3, 3a) eine sich über einen Teil der Höhe erstreckende Abflachungsfläche bildet, wobei die Abflachungsflächen von zwei Elementen in aneinandergrenzenden Weise angeordnet sind, um einen ersten Satz von Elementen zu bilden, die einem zweiten Satz von in derselben Weise geschaffenen aber in bezug auf den ersten Satz von Elementen umgekehrt angeordneten Elementen komplementär entsprechen.

2. Vorrichtung nach Anspruch 1, dadurch gekennzeichnet, daß sie in einer Packung (5) rechteckigen Querschnitts eingesetzt wird.

3. Vorrichtung gemäß einem der Ansprüche 1 oder 2, dadurch gekennzeichnet, daß sie zum Teil aus Keks oder dergleichen und zum Teil aus einem anderen Nahrungsstoff hergestellt wird.

4. Vorrichtung nach einem der Ansprüche 1 bis 3, dadurch gekennzeichnet, daß die Abstumpfung jedes Elementes eine sich etwa über die Hälfte der Höhe des Elementes erstreckende Abflachungsfläche (3) abgrenzt.

5. Vorrichtung gemäß einem der Ansprüche 1 bis 4, dadurch gekennzeichnet, daß die Spitztüten jeweils die allgemeine Gestalt eines Pyramidenstumpfes mit einer kleinen viereckigen Basis und einer großen durch die die Abflachungsflächen (3) bildende Abstumpfung abgegrenzten fünfeckigen Basis aufweisen.

6. Vorrichtung nach einem der Ansprüche 1 bis 5, dadurch gekennzeichnet, daß die Seiten des Elementes schaffe Eckkanten aufweisen.

7. Vorrichtung gemäß einem der Ansprüche 1 bis 6, dadurch gekennzeichnet, daß die Seiten der Elemente durch Abrundungen (6) verbunden sind.

8. Vorrichtung nach einem der Ansprüche 1 bis 7, dadurch gekennzeichnet, daß wenigstens eine der Seiten oder der Basisflächen der Elemente konkav oder konvex ist.

9. Vorrichtung nach einem der Ansprüche 1 bis 8, dadurch gekennzeichnet, daß eines der Elemente eines Satzes von Elementen eine konvexe Fläche (C') oder eine konkave Fläche (D') aufweist und daß die Elemente eines zweiten Satzes Flächen mit entgegengesetzter Konvexität und Konkavität aufweisen.

10. Vorrichtung nach einem der Ansprüche 1 bis 9, gekennzeichnet durch verschiedene sich über wenigstens einen Teil der durch die Seiten jedes Elementes gebildeten Eckwinkel erstreckende Abflachungen, Fasen oder Konkavitäten.

11. Vorrichtung gemäß einem der Ansprüche 1 bis 4, dadurch gekennzeichnet, daß die schräge Spitztüte die allgemeine Gestalt eines Kegels von der großen Basis ab hat.

12. Vorrichtung gemäß einem der Ansprüche 1 bis 4 und 11, dadurch gekennzeichnet, daß der Kegel eine schräge Achse aufweist.

13. Vorrichtung nach einem der Ansprüche 1 bis 4, 11 und 12, dadurch gekennzeichnet, daß jedes Element in bezug auf die Abflachungsfläche (3a) entweder unter etwa 45° oder etwa 60° angeordnete zusätzliche Abflachungsflächen (3'a, 3''a) aufweist.

14. Vorrichtung nach einem der Ansprüche 1 bis 4 und 11 bis 13, dadurch gekennzeichnet, daß jedes Element durch einen Kegelstumpf gebildet wird.

15. Vorrichtung nach einem der Ansprüche 1 bis 14, dadurch gekennzeichnet, daß wenigstens die große Basis jedes Elementes durch eine teilbare oder abschälbare dünne Folie verschloßen wird.
